# EUROPEAN PATENT SPECIFICATION

(11) **EP 2 755 409 B1**
(45) Date of publication and mention of the grant of the patent: **26.02.2020**
(21) Application number: 12782054.6
(22) Date of filing: 19.01.2012
(51) Int. Cl.: H04L 12/58, H04W 4/12, H04M 1/725, H04N 21/414, H04N 1/00

(54) **MULTIMEDIA MESSAGE EDITING METHOD AND DEVICE**
EDITIERVERFAHREN UND VORRICHTUNG FÜR MULTIMEDIA-NACHRICHTEN
PROCÉDÉ ET DISPOSITIF D'ÉDITION DE MESSAGE MULTIMÉDIA

(30) Priority: 08.10.2011 CN 201110299933
(43) Date of publication of application: 16.07.2014
(73) Proprietor: ZTE Corporation, Shenzhen, Guangdong 518057 (CN)
(72) Inventor: HUANG, Lianfang, Shenzhen Guangdong 518057 (CN); LIU, Jiejie, Shenzhen Guangdong 518057 (CN); FANG, Wen, Shenzhen Guangdong 518057 (CN)
(74) Representative: Ligi, Stefano
(86) International application number: PCT/CN2012/070622
(87) International publication number: WO 2012/152089

(56) References cited:
- EP-A1- 1 494 153
- EP-A1- 1 531 417
- EP-A2- 1 117 230
- CN-A- 101 009 128
- CN-A- 101 237 637
- CN-A- 102 025 831
- CN-A- 102 111 725
- ORATRIX: "GRiNS Pro Editor for SMIL 2.0 : Quick Start Guide", INTERNET CITATION, March 2002 (2002-03), XP002320100, Retrieved from the Internet: URL:http://www.oratrix.com/Products/G2E/do cs [retrieved on 2005-03-04]
- NOVAK L ET AL: "MMS-BUILDING ON THE SUCCESS OF SMS", ERICSSON REVIEW (INCL. ON), TELEFONAKTIEBOLAGET L M ERICSSON, SE, no. 3, 1 January 2001 (2001-01-01), pages 102-109, XP001081066, ISSN: 0014-0171

## Description

### TECHNICAL FIELD

The disclosure relates to Multimedia Messaging Service (MMS) message processing technology, and particularly to an MMS message editing method and device.

### BACKGROUND

An MMS message with the integration of a text, an image, audio and video is an application popularly used currently. The MMS message integrates different kinds of media files by using Synchronized Multimedia Integration Language (SMIL). Like Microsoft PowerPoint, the MMS message adds a text, an image, music and the like into each piece of slide to produce an illustrated multimedia message. The edition for the MMS message is carried out in an MMS message editor which converts an edition operation of a user into SMIL, stores the SMIL and provides a preview.

The SMIL is generally divided into two parts: Head and Body. The MMS message corresponding to the following SMIL file contains three pieces of slides: a slide of image, a slide of audio and a slide of video, in each of which text information is contained. The Head part mainly enumerates the size of a page, the elements contained in the page, and the display length, width and position of each element. The Body part mainly contains the play time of the page, an index for the elements in the page, and the corresponding display position of each element in the Head. For example, an SMIL file is as follows:

```
  <smil>
  <head>
  <layout>
  <root-layout width="240" height="400" background-color="#ffffff"/>
  <region id="Image" width="100%" height="50%" left="0%" top="0%"
  fit="meet"/>
  <region id="Text" width="100%" height="50%" left="0%" top="50%"
  fit="scroll"/>
  </layout>
 <head>
 <body>
 <par dur="5000ms">
 <text src="T001.txt" region="Text" />
 <img src="I1313510998.jpg" region="Image" />
 </par>
 <par dur="5000ms">
 <text src="T002.txt" region="Text" />
 <video src="160811-1610.3gp" region="Image" />
 </par>
 <par dur="5000ms">
 <text src="T003.txt" region="Text" />
 <audio src="081616102000.amr" />
 </par>
 </body>
 </smil>
```

It can be seen from the aforementioned SMIL file that the Identifier (ID) of used resource is marked in the SMIL so that the resource corresponding to the ID can be found out with an ID and displayed according to the description in the SMIL. Om addition, attributes, including dur, begin, end, clip-begin, clip-end and the like, may also be contained in the SMIL file to describe the play attribute of a media file in more detail.

Similar to Hypertext Markup Language (HTML) used in webpages, an existing webpage is supported by the SMIL in adding a tag on a browse interface, but an existing MMS message editor is not supportive to this function. In addition, the play and the edition of the MMS message are separated at present, making it impossible for a user to make a direct adjustment on the irrational position or size of an image or video during the process of preview. The combination of the play and the edition of the MMS message, if realized, will well achieve a 'what you see is what you get' effect.

EP 1 117 230 A2 discloses that a method for presenting information contained in messages in a terminal (MS). In the method, the message comprises at least one component. The message is transmitted to a terminal (MS) in a system for transmitting multimedia messages. In the method, a presentation model (SMIL) is formed to contain information related to the presentation of each component attached in the message. Said presentation model (SMIL) is supplemented with a reference about the location of each component in the message, and said presentation model (SMIL) is attached to said message.

EP 1 531 417 A1 discloses that the type of a multimedia object integrated in a message is recognized by a multimedia client module (12) and by a SMIL editor unit (14). Information related to the object is transmitted from an activation module (16) towards processing operators (18A-18C). Acknowledge message is transmitted from the operator towards the module (12) that transmits the object towards operator to activate processing of the message. Independent claims are also included for the following: (A) a telecommunication terminal (B) a recording medium comprising a program for executing steps of a method for composition and transmission of message.

### SUMMARY

The disclosure aims to provide an MMS message editing method and device according to the accompanying independent claims, in order to solve the problem that an MMS message cannot be edited or modified at present when previewed or nothing can be manually drawn on a preview interface.

To this end, an MMS message editing method is provided, which includes: the operated content of the MMS message is described by using SMIL according to the operation of a user on the content of the MMS message; the content of the MMS message content is played by using the SMIL when the content of the MMS message needs to be previewed; and
the content of the MMS message is edited in a preview mode when the content of the MMS message is previewed, the SMIL is modified and the modified SMIL is stored.

In the method, the editing the content of the MMS message in a preview mode may include: a position, a size or duration of multimedia media element is adjusted and the content of the MMS message is drawn in the preview mode.

In the method, the adjusting a position of a media element may include:
during the process of adjusting a first media element, the user is given a prompt if coordinate points of the first media element are partially or entirely contained in the range of a second media element; the second media element is covered with the first media element if the user confirms to cover the second media element with the first media element, or the first media element is restored to its original position if the user chooses not to cover the second media element with the first media element; or
a position of the second media element and a position of the first media element are exchanged.

In the method, the adjusting a size of a media element may include:
the media element is stretched or shrunk and the media element is backed up.

In the method, the adjusting duration of a media element may include:
the duration corresponding to the media element is displayed when the MMS message enters the preview mode, and the duration of the media element is adjusted based on the starting moment and the ending moment of the media element.

In the method, the drawing the content of the MMS message in the preview mode may include:
the drawn image or tag and an original image are combined into one image, the combined image is stored in a file system and a new file Identifier (ID) is generated; or
a new element type is defined, and a tag is added and an image is drawn on the interface, wherein an ID is generated automatically by the file system and the image corresponding to the ID is stored in the file system.

In the method, the tag may include: a pen point type, a pen point color, an eraser and cancel for controlling a type and a color of the tag, which are used for controlling a type and a color of the tag.

The disclosure also discloses an MMS message editing device, which includes:
an MMS message editing module configured to describe, according to an operation of a user on content of an MMS message, the operated content of the MMS message by using SMIL, the content of the MMS message including a media element;
a preview module configured to play the MMS message by using the SMIL when the MMS message needs to be previewed; and
a preview editing module configured to edit the content of the MMS message in a preview mode when the MMS message content is previewed, modify the SMIL and store the modified SMIL.

In the device, the preview editing module may be configured to adjust a position, a size or duration of a media element and draw the content of the MMS message in the preview mode.

In the device, the preview editing module may include:
a pen point control configured to provide pen point types and pen point colors on the preview interface for the user to select calligraphy of a different thickness or color for use; and
a modification control configured to provide an eraser and cancel on the preview interface to enable the user erase or cancel the drawn content.

By means of the technical solution of the disclosure, an editing function is added in the preview of an MMS message, so that a user can stretch a media file, shrink the media file or adjust the position of the media file on an interface, or can also add a tag or draw an image on the interface, thus greatly enriching functions of an MMS message slide and improving user experience. In addition, the disclosure can achieve an expected effect only by making a little modification on a device, without changing hardware or software significantly.

### BRIEF DESCRIPTION OF THE DRAWINGS

The accompanying drawings illustrated here are intended to provide further understanding to the disclosure, and constitute a portion of the disclosure. Illustrative embodiments of the disclosure and description thereof are used to explain the disclosure instead of constituting improper restriction to the disclosure. In the accompanying drawings:
Fig. 1 is a structure diagram of a first embodiment of the disclosure;
Fig. 2 is a flowchart of a second embodiment of the disclosure;
Fig. 3 is a schematic diagram illustrating unadjusted media elements of an MMS message according to the second embodiment of the disclosure;
Fig. 4-1 and Fig. 4-2 are schematic diagrams illustrating adjustment on positions of media elements according to the second embodiment of the disclosure;
Fig. 5 is a schematic diagram illustrating adjustment on the size of a media element according to the second embodiment of the disclosure;
Fig. 6 is a schematic diagram illustrating adjustment on the duration of a media element according to the second embodiment of the disclosure; and
Fig. 7 is a schematic diagram illustrating a manually drawn image or tag according to the second embodiment of the disclosure.

### DETAILED DESCRIPTION

In order to make the technical problem to be solved, the technical solution and beneficial effects of the disclosure clearer and easier to understand, the disclosure is further elaborated below with reference to the drawings and embodiments. It should be understood that the specific embodiments described here are only intended to interpret the disclosure instead of limiting the disclosure.

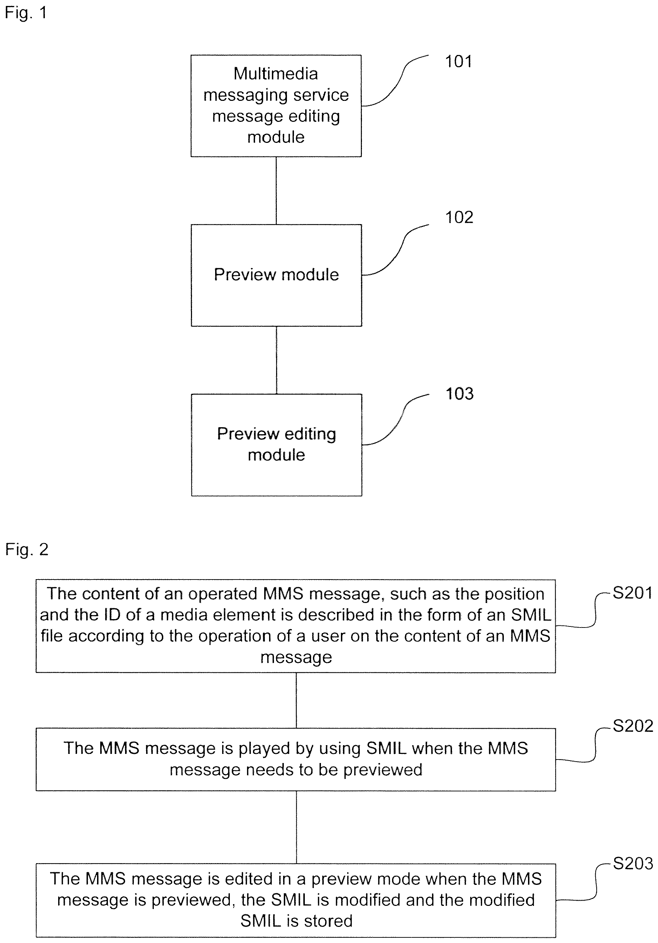

Fig. 1 is a structure diagram of a first embodiment of the disclosure. As shown in Fig. 1, an MMS message editing device disclosed herein includes:
an MMS message editing module 101 configured to describe, according to an operation of a user on the MMS message content, the operated MMS message content, such as a position of a media element and an ID of a media element, in the form of an SMIL file, wherein the MMS message content consists of media elements, and the attributes of each media element include the position, the size, the duration and the like of the media element;
a preview module 102 configured to play the MMS message by using the SMIL when the MMS message needs to be previewed; and
a preview editing module 103 configured to edit the MMS message in a preview mode when the MMS message is previewed, modify the SMIL and store the modified SMIL.

Specifically, the edition on the MMS message in a preview mode includes: an adjustment on the position, the size or the duration of a media element, and the drawing of the user;
the position of an image is adjusted by long pressing any position within the image and dragging the image to any position, and a prompt is given to the user when the image covers a text or another image;
for an audio or video, a duration progress bar is displayed on the preview interface so that the show time of the audio or video can be adjusted by dragging the starting position and the ending position of the duration progress bar; and
the edge or four corners of an image can be dragged to adjust, for example, stretch or shrink, the size of the image.

After the user confirms and stores the modification made in the preview mode, the cell phone of the user searches for corresponding resource information from the SMIL file according to the modified ID of the media element, and changes attribute values of the original SMIL file according to the current position, size, duration or the like of the SMIL file.

In a full-screen preview state of the MMS message, the user is allowed to manually draw or delineate content, for example, delineating or punctuating the key content of a slide.

The preview editing module further includes:
a pen point control configured to provide pen point types and pen point colors on the preview interface for the user to select the calligraphy of a different thickness or color for use; and
a modification control configured to provide an eraser and cancel on the preview interface to enable the user to erase or cancel the drawn content.

After the user confirms and stores the modification made in the preview mode, the position of the drawn image is read, and the ID and corresponding attributes of the newly-added image are added in the original SMIL file.

Fig. 2 is a flowchart of a second embodiment of the disclosure. As shown in Fig. 2, an MMS message editing method disclosed herein includes:
Step S201: The content of an operated MMS message, such as the position and the ID of a media element is described in the form of an SMIL file according to the operation of a user on the content of an MMS message. The content of the MMS message includes media elements, and specifically includes the page information of the MMS message, the multimedia information of the page and the layout information of the page.
Step S202: The MMS message is played by using SMIL when the MMS message needs to be previewed; and
Step S203: The MMS message is edited in a preview mode when the MMS message is previewed, the SMIL is modified and the modified SMIL is stored.

The editing the MMS message in the preview mode includes the adjustment on the position, the size or the duration of a media element and the drawing of the user.

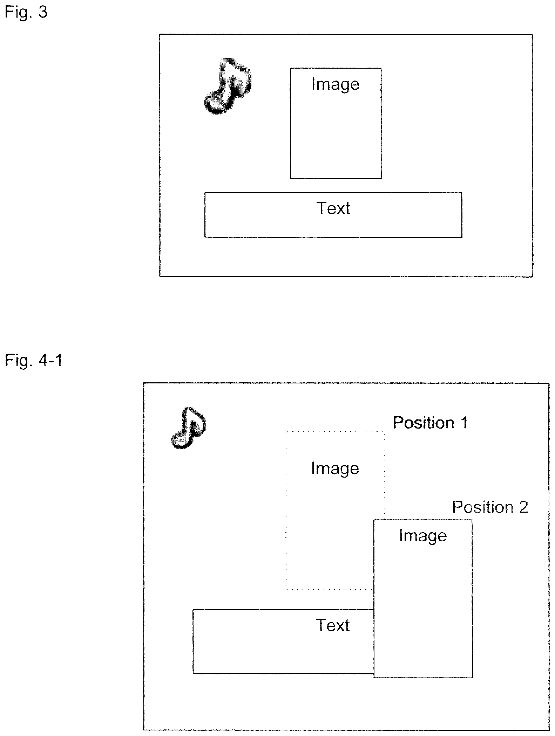

Specifically, Fig. 3 is a schematic diagram illustrating unadjusted media elements of an MMS message according to the second embodiment of the disclosure. The MMS message includes an audio file, an image and text information, and the MMS message is played in a format preset by a terminal.

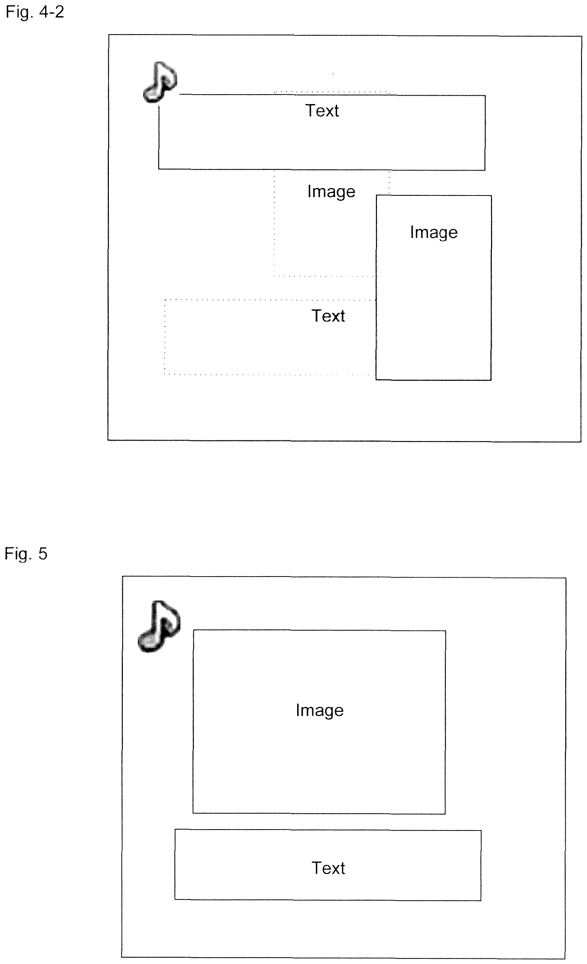

Fig. 4-1 and Fig. 4-2 are schematic diagrams illustrating adjustment on positions of media elements according to the second embodiment of the disclosure, including scenario 1 and scenario 2.

Scenario 1: As shown in Fig. 4-1, the image is long pressed to be dragged from position 1 to position 2. If the image covers the text during the drag process, that is, if coordinate points of the image are partially or entirely contained in the range of text information, a prompt is given to the user. If the user confirms the coverage, the image covers the text. If the user chooses not to cover the text, the image is restored to its original position or the interface is changed to the interface shown in scenario 2.

After the position of the multimedia element in the MMS message is modified, the user stores the modified MMS message, and then the SMIL file of the MMS message is updated. By taking the SMIL file mentioned in the BACKGROUND as an example, the layout in the SMIL file in scenario 1 is modified as follows:

```
  <layout>
  <root-layout width="240" height="400" background-color="#ffffff"/>
  <region id="Image" width="100%" height="50%" left="25%" top="25%"
  fit="meet"/>
  <region id="Text" width="100%" height="50%" left="0%" top="50%"
  fit="scroll"/>
  </layout>
  Scenario 2: as shown in Fig.4-2, after the position of the image is modified,
  the text information in the slide is exchanged in position with the original image
  according to the residual space condition of the page.
  To facilitate understanding, still taking the SMIL file mentioned in the
  BACKGROUND as an example, the layout in the SMIL file is as follows:
  <layout>
  <root-layout width="240" height="400" background-color="#ffffff"/>
  <region id="Image" width="100%" height="50%" left="0%" top="0%"
  fit="meet"/>
  <region id="Text" width="100%" height="50%" left="0%" top="50%"
  fit="scroll"/>
  </layout>
```

It can be seen that the coordinates of the top left corner of the image are (0, 0), the size of the image is (120^{∗}120) (the original size of the image is 240^{∗}240, as fit is equal to meet, the original size of the image is scaled to half of the original size of the image according to the size of the page), and the coordinates of the top left corner of text information are (0, 200). The image is dragged to the coordinate point (60, 100) to partially cover the text information. The terminal prompts the user whether to cover the text information. If the user selects 'Yes', then the text and the image are displayed in an overlapped manner. If the user selects 'No', then the image is restored to the initial position or is moved to a new position, and the position of the text is changed. As shown in scenario 2, the position of the text information and the position of the image are exchanged.

Fig. 5 is a schematic diagram illustrating the adjustment on the size of a media element according to the second embodiment of the disclosure. As shown in Fig. 5, the adjustment includes:
dragging the edge or four corners of the image to stretch or shrink the size of the image.

Still taking the SMIL file mentioned in the Background as an example, the original width of the image is dragged to be doubled, thus the size of the image is changed from the original 120^{∗}200 to 240^{∗}200. At this moment, the layout of the original SMIL file is modified as follows:

```
  <layout>
  <root-layout width="240" height="400" background-color="#fffffT'/>
  <region id="Image" width="100%" height="50%" left="0%" top="0%"
  fit="hidden"/>
  <region id="Text" width="100%" height="50%" left="0%" top="50%"
  fit="scroll"/>
  </layout>
```

Since the previous attribute of the image is 'meet', which indicates a scale-up or scale-down change, it is not applicable to the stretch or shrink of the image in the embodiment. Thus, in this operation, the Image attribute in the SMIL file is modified to be hidden after the image is changed in size. Hidden indicates that a multimedia clip is kept unchanged in the size, and the multimedia clip is started to be displayed from the top left corner of the window. The margin part of the window is filled with the background color if the multimedia clip is smaller in size than the window. If the part of the multimedia clip beyond the window is cut off and not displayed if the multimedia clip is larger in size than the window.

Here, as the image is changed in size, it is needed to back up the original image. The size of the backed-up image is the modified size (here being 240^{∗}200), and the ID corresponding to the SMIL file is modified to be the modified ID (e.g., I1313510998(1)). The image-related modification in the Body part of the original SMIL file is as follows:

```
  <img src="I1313510998(1).jpg" region="Image" />
```

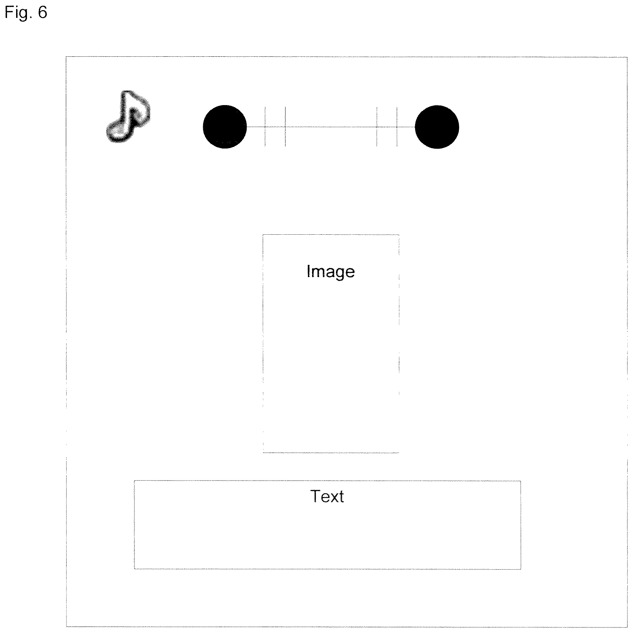

Fig. 6 is a schematic diagram illustrating the adjustment on the duration of a media element according to the second embodiment of the disclosure. As shown in Fig. 6, the adjustment includes:
a corresponding duration of a multimedia audio is displayed when an MMS message enters into an editing mode. The user may adjust the duration of the audio of the MMS message by adjusting the starting moment and the ending moment of the audio. If the duration of the audio is from 2s to 4s, then the audio-related attributes in SMIL are modified as follows:

```
  <audio src="081616102000.amr", clip-begin="2000ms" clip-end="4000ms" />
```

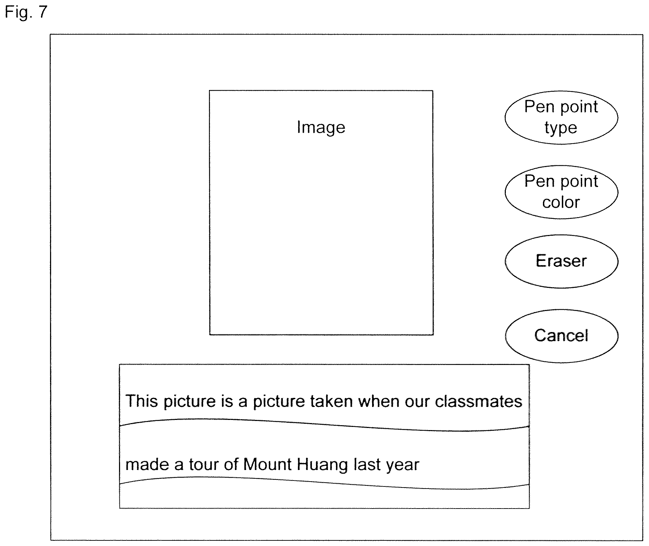

Fig. 7 is a schematic diagram illustrating a manually drawn image or tag according to the second embodiment of the disclosure. As shown in Fig. 7, the drawing is achieved in the following ways:
Way 1: The drawn image or tag and an original image are combined into one image, the combined image is stored in a file system and a new file ID is generated. By taking the SMIL file mentioned in the BACKGROUND as an example, it is assumed that a new image ID is Image_new, then the Head part is modified as follows:

```
  <head>
  <layout>
  <root-layout width="240" height="400" background-color="#ffffff"/>
  <region id="Image" width="100%" height="100%" left="0%" top="0%"
  fit="hidden"/>
  <region id="Text" width="100%" height="50%" left="0%" top="50%"
  fit="scroll"/>
  </layout>
  <head>
```

Here, the height is modified to be 100% so that the image can cover the full screen, and the fit is selected to be Hidden so that the image can be displayed in the original size.

Here, the Body part is modified to replace the original name with Image_New.

```
  <img src="Image_new.jpg" region="Image" />
```

Way 2: A new element type is defined, for example, the element type is set as 'Mark', a tag is added and an image is drawn on an interface, a corresponding resource ID and related attributes are added in the original SMIF file, wherein the resource ID is automatically generated by a system, and a corresponding image is stored in the file system.

Two horizontal lines shown in Fig. 7 can be considered to be two Marks, and two images are named as mark1 and mark2. Then, in the original SMIL file, two new lines of content are added in the Head part:

```
  <head>
  <layout>
  <root-layout width="240" height="400" background-color="#fffffT'/>
  <region id="Image" width="100%" height="50%" left="0%" top="0%"
  fit="meet"/>
  <region id="Text" width="100%" height="50%" left="0%" top="50%"
  fit="scroll"/>
  <region id="Mark1" width="100%" height="50%" left="0%" top="60%"
  fit="hidden"/>
  <region id="Mark2" width="100%" height="50%" left="0%" top="80%"
  fit="hidden"/>
  </layout>
  <head>
```

The Body part is added with the following contents:

```
  <body>
  <par dur="5000ms">
  <text src="T001.txt" region="Text" />
  <img src="I1313510998.jpg" region='Image" />
  <img src="mark1.jpg" region="Mark1" />
  <img src=" mark1.jpg" region=" Mark 2" />
 </par>
```

In addition, spaces for 'a pen point type ', 'a pen point color', 'eraser' and 'cancel' are added on a tag interface to control the type and the color of a tag.

The foregoing description illustrates and describes the preferred embodiment of the disclosure.

## Claims

1. A Multimedia Messaging Service, MMS message editing method, the method comprising:
describing, according to an operation of a user on content of an MMS message, the operated content of the MMS message by using Synchronized Multimedia Integration Language, SMIL (S201); and playing the content of the MMS message by using the SMIL when the content of the MMS message needs to be previewed (S202); and
editing the content of the MMS message in a preview mode when the content of the MMS message is previewed, modifying the SMIL and storing the modified SMIL (S203);
wherein the editing the content of the MMS message in the preview mode comprises:
adjusting a position, a size or duration of a media element and drawing the content of the MMS message in the preview mode.

2. The method according to claim 1, wherein the adjusting a position of a media element comprises:
during the process of adjusting a first media element, giving the user a prompt if coordinate points of the first media element are partially or entirely contained in a range of a second media element; covering the second media element with the first media element if the user confirms to cover the second media element with the first media element, or restoring the first media element to its original position if the user chooses not to cover the second media element with the first media element; or
exchanging a position of the second media element and a position of the first media element.

3. The method according to claim 1, wherein the adjusting a size of a media element comprises:
stretching or shrinking the media element, and backing up the media element.

4. The method according to claim 1, wherein the adjusting duration of a media element comprises:
displaying the duration corresponding to the media element when the MMS message enters the preview mode, and adjusting the duration of the media element based on a starting moment and an ending moment of the media element.

5. The method according to claim 1, wherein the drawing the content of the MMS message comprises:
combining the drawn image or tag and an original image into one image, storing the combined image in a file system and generating a new file Identifier, ID; or
defining a new element type, adding a tag and drawing an image on an interface, wherein an ID is generated automatically by the file system and the image corresponding to the ID is stored in the file system.

6. The method according to claim 5, wherein
the tag includes: a pen point type, a pen point color, an eraser and cancel, which are used for controlling a type and a color of the tag.

7. A Multimedia Messaging Service, MMS message editing device, the device comprising:
an MMS message editing module (101) configured to describe, according to an operation of a user on content of an MMS message, the operated content of the MMS message by using Synchronized Multimedia Integration Language, SMIL, the content of the MMS message including a media element;
a preview module (102)configured to play the MMS message by using the SMIL when the MMS message needs to be previewed; and
a preview editing module (103) configured to edit the content of the MMS message in a preview mode when the MMS message is previewed, modify the SMIL and store the modified SMIL;
wherein the preview editing module (103) is configured to adjust a position, a size or duration of a media element and draw the content of the MMS message in the preview mode.

8. The device according to claim 7, wherein the preview editing module (103) comprises:
a pen point control configured to provide pen point types and pen point colors on a preview interface for the user to select calligraphy of a different thickness or color; and
a modification control configured to provide an eraser and cancel on the preview interface to enable the user to erase or cancel the drawn content.

## Patentansprüche

1. Editierverfahren für Multimedia-Nachrichtendienst, MMS, wobei das Verfahren umfasst:
Beschreiben, gemäß einer Bedienung eines Benutzers an dem Inhalt einer MMS-Nachricht, des bedienten Inhalts der MMS-Nachricht durch Verwendung von synchronisierter Multimedia-Integrationssprache, SMIL (S201); und Wiedergabe des Inhalts der MMS-Nachricht durch Verwendung der SMIL, wenn der Inhalt der MMS-Nachricht vorgeschaut werden muss (S202); und
Editieren des Inhalts der MMS-Nachricht in einem Vorschau-Modus, wenn der Inhalt der MMS-Nachricht vorgeschaut wird, Ändern der SMIL und Speichern der geänderten SMIL (S203);
worin das Editieren des Inhalts der MMS-Nachricht in dem Vorschau-Modus umfasst:
Einstellen einer Stellung, einer Größe oder einer Dauer eines Medienelementes und Zeichnen des Inhalts der MMS-Nachricht in dem Vorschau-Modus.

2. Verfahren nach Anspruch 1, worin das Einstellen einer Stellung eines Medienelementes umfasst:
während des Vorgangs des Einstellens eines ersten Medienelementes, dem Benutzer eine Meldung geben, wenn Koordinatenpunkte des ersten Medienelementes teilweise oder vollständig in einem Bereich eines zweiten Medienelementes enthalten sind; Abdecken des zweiten Medienelementes mit dem ersten Medienelement, wenn der Benutzer das Abdecken des zweiten Medienelementes mit dem ersten Medienelement bestätigt, oder Zurückstellen des ersten Medienelementes zu seiner ursprünglichen Stellung, wenn der Benutzer sich entschließt, das zweite Medienelement mit dem ersten Medienelement nicht abzudecken; oder
Austauschen einer Stellung des zweiten Medienelementes und einer Stellung des ersten Medienelementes.

3. Verfahren nach Anspruch 1, worin das Einstellen einer Größe eines Medienelementes umfasst:
Ausdehnen oder Schrumpfen des Medienelementes und Sichern des Medienelementes.

4. Verfahren nach Anspruch 1, worin das Einstellen der Dauer eines Medienelementes umfasst:
Anzeigen der Dauer, die dem Medienelement entspricht, wenn die MMS-Nachricht in den Vorschau-Modus eintritt, und Einstellen der Dauer des Medienelementes aufgrund eines Anfangsmomentes und eines Endmomentes des Medienelementes.

5. Verfahren nach Anspruch 1, worin das Zeichnen des Inhalts der MMS-Nachricht umfasst:
Kombinieren des gezeichneten Bildes oder Etikettes und eines ursprünglichen Bildes in ein einziges Bild, Speichern des kombinierten Bildes in einem Dateisystem und Erzeugen einer neuen Dateikennung, ID; oder
Definieren eines neuen Elementtyps, Hinzufügen eines Etikettes und Zeichnen eines Bildes auf einer Schnittstelle, worin ein ID vom Dateisystem automatisch erzeugt wird und das Bild, das dem ID entspricht, im Dateisystem gespeichert wird.

6. Verfahren nach Anspruch 5, worin das Etikett umfasst: einen Schreiberspitzentyp, eine Schreiberspitzenfarbe, einen Radierer und Löschen, die verwendet werden, um einen Typ und eine Farbe des Etikettes zu regeln.

7. Editiervorrichtung für Multimedia-Nachrichtendienst, MMS, wobei die Vorrichtung umfasst:
ein MMS-Nachrichteneditiermodul (101), das dazu eingerichtet ist, um, gemäß einer Bedienung eines Benutzers an dem Inhalt einer MMS-Nachricht, den bedienten Inhalt der MMS-Nachricht durch Verwendung von synchronisierter Multimedia-Integrationssprache, SMIL, zu beschreiben, wobei der Inhalt der MMS-Nachricht ein Medienelement umfasst;
ein Vorschaumodul (102), das dazu eingerichtet ist, um die MMS-Nachricht durch Verwendung der SMIL wiederzugeben, wenn der Inhalt der MMS-Nachricht vorgeschaut werden muss; und
ein Vorschau-Editiermodul (103), das dazu eingerichtet ist, um den Inhalt der MMS-Nachricht in einem Vorschau-Modus zu editieren, wenn die MMS-Nachricht vorgeschaut wird, die SMIL zu ändern und die geänderte SMIL zu speichern;
worin das Vorschau-Editiermodul (103) dazu eingerichtet ist, um eine Stellung, eine Größe oder eine Dauer eines Medienelementes einzustellen und den Inhalt der MMS-Nachricht in dem Vorschau-Modus zu zeichnen.

8. Vorrichtung nach Anspruch 7, worin das Vorschau-Editiermodul (103) umfasst:
eine Schreiberspitzensteuerung, die dazu eingerichtet ist, um Schreiberspitzentype und Schreiberspitzenfarben an einer Vorschauschnittstelle zu liefern, damit der Benutzer die Kalligraphie einer verschiedenen Dicke oder Farbe auswählen kann; und
eine Änderungssteuerung, die dazu eingerichtet ist, um einen Radierer und Löschen an der Vorschauschnittstelle zu liefern, um dem Benutzer zu ermöglichen, den gezeichneten Inhalt auszuradieren oder zu löschen.

## Revendications

1. Méthode pour l'édition d'un message Multimédia Messaging Service MMS, la méthode comprenant les étapes suivantes :
description, selon une opération d'un utilisateur sur le contenu d'un message MMS, du contenu opéré du message MMS au moyen d'un langage Synchronized Multimedia Integration SMIL (S201); et reproduction du contenu du message MMS au moyen du SMIL quand le contenu du message MMS doit etre prévisualisé (S202); et
édition du contenu du message MMS dans un mode de prévisualisation quand le contenu du message est prévisualisé, en modifiant le SMIL et en enregistrant le SMIL modifié (S203);
dans laquelle l'édition du contenu du message MMS dans le mode de prévisualisation comprend:
réglage d'une position, d'une taille ou d'une durée d'un élément média et faire glisser le contenu du message MMS dans le mode de prévisualisation.

2. Méthode selon la revendication 1, dans laquelle le réglage de la position d'un élément média comprend:
durant la procédure de réglage d'un premier élément média, donner une invite à l'utilisateur si les points de coordonnées du premier élément média sont partiellement ou entièrement contenus dans un intervalle d'un second élément média; couvrirer le second élément média avec le premier élément média si l'utilisateur confirme de couvrir le second élément média avec le premier élément média, ou restaurer le premier élément média dans sa position originale si l'utilisateur choisit de ne pas couvrir le second élément média avec le premier élément média; ou
échanger une position du second élément média et une position du premier élément média.

3. Méthode selon la revendication 1, dans laquelle le réglage de la taille de l'élément média comprend :
étirer ou comprimer l'élément média, et faire une sauvgarde de l'élément média.

4. Méthode selon la revendication 1, dans laquelle le réglage de la durée d'un élément média comprend :
visualiser la durée correspondant à l'élément média quand le message MMS entre dans le mode de prévisualisation, et régler la durée de l'élément média sur la base d'un moment de départ et d'un moment de fin de l'élément média.

5. Méthode selon la revendication 1, dans laquelle le glissage du contenu du message MMS comprend :
combiner l'image ou le tag glissé et une image originale en une image, enregistrer l'image combinée dans un système de fichier et générer un nouvel identifiant de fichier, ID; ou
définir un nouveau type d'élément, ajouter un tag et faire glisser une image sur une interface, dans laquelle un ID est généré automatiquement par un système de fichier et une image correspondant à l'ID est enregistrée dans le système de fichier.

6. Méthode selon la revendication 5, dans laquelle
le tag inclut: un type de pointe de stylo, une couleur de pointe de stylo, une gomme et effaceur, qui sont utilisés pour controler un type et une couleur du tag.

7. Dispositif d'édition de message Multimedia Messaging Service MMS, le dispositif comprenant :
un module d'édition (101) de message MMS configuré pour décrire, selon une opération d'un utilisateur sur un contenu d'un message MMS, le contenu opéré du message MMS en utilisant un langage Synchronized Multimedia Integration Language SMIL, le contenu du message MMS contenant un élément média ;
un module de prévisualisation (102) configuré pour reproduire le message MMS en utilisant le SMIL quand le message MMS doit etre prévisualisé ; et
un module d'édition de prévisualisation (103) configuré pour éditer le contenu du message MMS dans un mode de prévisualisation quand le message MMS est prévisualisé, modifier le SMIL et enregistrer le SMIL modifié ;
dans lequel le module d'édition de prévisualisation (103) est configuré pour régler une position, une taille ou une durée d'un élément média et faire glisser le contenu du message MMS dans le mode de prévisualisation.

8. Dispositif selon la revendication 7, dans lequel le module d'édition de prévisualisation (103) comprend :
une commande de pointe de stylo configuré pour fournir des types de pointe de stylo et des couleurs de pointe de stylo sur une interface de prévisualisation pour que l'utilisateur sélectionne une caligraphie d'une épaisseur ou couleur différente ; et
une commande de modification configurée pour fournir une gomme et effaceur sur l'interface de prévisualisation pour permettre à l'utilisateur de gommer ou effacer le contenu glissé.
